# EUROPEAN PATENT APPLICATION

(11) **EP 2 527 965 A1**
(43) Date of publication of application: **28.11.2012**
(21) Application number: 10855811.5
(22) Date of filing: 17.11.2010
(51) Int. Cl.: G06F 3/048, G06F 17/30

(54) **MOBILE TERMINAL AND FILE BROWSING METHOD IMPLEMENTED BY MOBILE TERMINAL**

(30) Priority: 11.08.2010 CN 201010254221
(71) Applicant: ZTE Corporation, Shenzhen, Guangdong 518057 (CN)
(72) Inventor: YAO, Nan, Shenzhen Guangdong 518057 (CN); YUAN, Xiaoli, Shenzhen Guangdong 518057 (CN); WANG, Wenhuan, Shenzhen Guangdong 518057 (CN); LIANG, Wanglewen, Shenzhen Guangdong 518057 (CN)
(74) Representative: Tischner, Oliver
(86) International application number: PCT/CN2010/078826
(87) International publication number: WO 2012/019390

(57) **Abstract**

A mobile terminal and a file browsing method implemented by the mobile terminal are disclosed, including: a scanning module scans the files in the mobile terminal and acquires related information of each file in the mobile terminal; an indexing module creates a global index list according to the related information of the files; and a browsing module classifies and displays the files according to the file types in the global index list while searching a target file. According to the technical solution, the target file can be quickly and conveniently found from the mobile terminal.

## Description

### TECHNICAL FIELD

The present disclosure relates to the file browsing field of mobile terminals, particularly to a mobile terminal and a file browsing method implemented by the mobile terminal.

### BACKGROUND

With the rapid development of mobile terminal technology, people make higher demands on both the function and convenience of mobile terminals. In the related art, the functions of mobile terminals are getting richer and the files used in mobile terminals keep increasing, including: text files such as short messages and e-books; hyper text files such as multimedia messages and mails; audio files; image files; video files; flash files; executable programs, and etc. Moreover, the storage space of mobile terminals, particularly intelligent mobile terminals, is increasing. Built-in flash, external flash storage cards and micro hard disks all become the storage media of mobile terminals. Consequently, the total storage capacity of a mobile terminal can be tens of Gigabytes (GB).

In a mobile terminal, conventional file storage is organized in the form of directory tree, and different files are stored in different directories of different storage media. The thinking habit of a user who wants to browse files is that when he/she wants to browse an image, a video or a mail, firstly he/she thinks of the type of a target file. However, the form of the directory tree in the related art does not accord with user's thinking habit. When files are organized in the form of directory tree, a user can not find a target file unless he/she knows both the name and directory of the target file. Moreover, when a directory tree is adopted, a link is not established between a file type and a file position, and thus no prompt about the position of the target file is provided. Further, a mobile terminal has numerous storage media and directories, therefore it is unlikely for a user to quickly find a target file when browsing a target file, because he/she can not remember the storage path of the target file.

Furthermore, mobile terminals have smaller screens and keyboards than computers do, the content displayed on a screen of a mobile terminal is limited, and it is rather inconvenient to perform scrolling, page turning and other operations, thereby increasing the difficulty of a user when he/she searches a target file from enormous files.

### SUMMARY

In view of the above facts, the main object of the present disclosure is to provide a mobile terminal and a file browsing method implemented by the mobile terminal, which can conveniently and quickly find a target file in the mobile terminal.

To achieve the foregoing object, the technical solution of the present disclosure is realized in the following way.

The present disclosure provides a mobile terminal, including: a scanning module, an indexing module and a browsing module, wherein,
the scanning module is configured to scan files in the mobile terminal and acquire related information of each file in the mobile terminal;
the indexing module is configured to create a global index list according to the related information of the each file; and
the browsing module is configured to classify and display the files according to file types in the global index list while searching a target file.

In the foregoing mobile terminal,
the browsing module may be further configured to trigger the indexing module to update the global index list during manual update of the global index list.

The foregoing mobile terminal may further include: a file reading and writing module, and a searching module, wherein,
the file reading and writing module is configured to, after file creation or deletion, create and delete an index item in the global index list through invoking an interface provided by the indexing module;
the searching module is configured to search the target file in the global index list according to an input keyword of the target file; and
the browsing module is further configured to display the target file searched out.

The present disclosure provides a file browsing method, including:
scanning files in a mobile terminal and acquiring related information of each file in the mobile terminal; creating a global index list according to the acquired related information of the each file;
classifying and displaying the files according to file types in the global index list while searching a target file.

In the foregoing method, the acquiring related information of each file in the mobile terminal may include:
scanning every file node through a read-write interface provided by a file system, acquiring file names and file paths of all the files in a storage medium of the mobile terminal, obtaining extension names of the files based on the file names, and sending the file names, file paths and extension names of the files to an indexing module of the mobile terminal by a scanning module of the mobile terminal.

In the foregoing method, the creating a global index list according to the acquired related information of the each file may include:
creating one index item for the each file by an indexing module of the mobile terminal according to the related information of the each file which is received by the index module;
wherein index items of all the files constitute the global index list; each index item in the global index list includes a file name, a file path, an extension name, a file type and a file subtype of each file.

The foregoing method may further include:
periodically updating the global index list by the indexing module; or after a new storage card is inserted into the mobile terminal, automatically updating the global index list by the indexing module; or after file creation or deletion, creating and deleting the index items in the global index list by a file reading and writing module of the mobile terminal through invoking an interface provided by the indexing module; or during manual update of the global index list, triggering the indexing module to update the global index list by a browsing module of the mobile terminal.

In the foregoing method, the classifying and displaying the files according to file types in the global index list may include:
reading the global index list via an interface of the indexing module of the mobile terminal, classifying and displaying the files according to the file types and file sub-types of the files in the global index list by a browsing module of the mobile terminal.

The foregoing method may further include:
selecting a file type of the target file from the file types displayed by the browsing module; displaying one or a plurality of file subtypes of this file type, selecting one file subtype from the plurality of file subtypes, displaying all files under this file subtype and selecting the target file from the all files under this file subtype by the browsing module.

The foregoing method may further include:
inputting a keyword of the target file;
searching the target file in the global index list by a searching module of the mobile terminal according to the keyword, and displaying the found target file by the searching module.

In the mobile terminal provided by the present disclosure and the file browsing method implemented by the mobile terminal, after the scanning module scans the files in the mobile terminal, the indexing module creates a global index list according to a scanning result. When a target file is found, the browsing module classifies and displays the files so that all video files in the mobile terminal are displayed under a video directory, and all audio files are displayed under an audio directory. The method by which enormous files in the mobile terminal are managed based on file types is more accordant with users' habits, so it increases the speed of searching a target file and can conveniently and quickly find the target file from the enormous files of the mobile terminal. The present disclosure is featured by simple operation, is particularly applicable to the mobile terminals with a small screen and a small keyboard, even without a keyboard, and significantly improves user experience and has a great market promotion value and a practical value.

### BRIEF DESCRIPTION OF THE DRAWINGS

Fig. 1 is a structural schematic diagram of composition of a mobile terminal provided by the present disclosure; and
Fig. 2 is a flow schematic diagram of realization of a file browsing method provided by the present disclosure.

### DETAILED DESCRIPTION

The basic idea of the present disclosure is: a scanning module scans files in a mobile terminal and acquires related information of each file in the mobile terminal; an indexing module creates a global index list according to the related information of the each file; a browsing module classifies and displays the files according to file types in the global index list while searching a target file..

The present disclosure will now be described with reference to the accompanying drawings and embodiments.

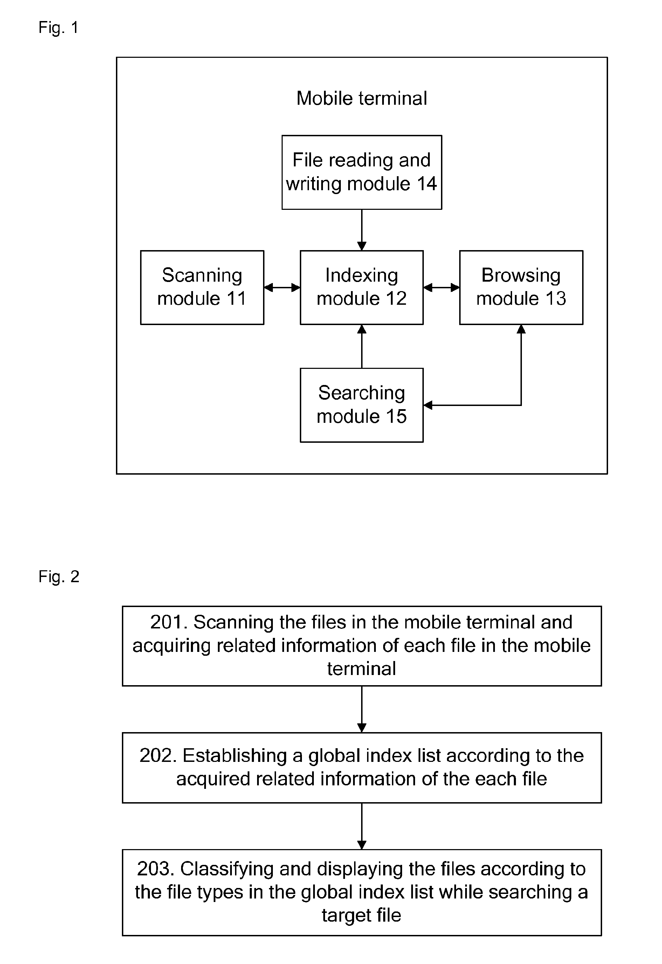

Fig. 1 is a structural schematic diagram of composition of a mobile terminal provided by the present disclosure. As shown in Fig. 1, the mobile terminal comprises: a scanning module 11, an indexing module 12 and a browsing module 13; wherein,
the scanning module 11 is configured to scan files in the mobile terminal and acquire related information of each file in the mobile terminal;
the indexing module 12 is configured to create a global index list according to the related information of the each file;
the browsing module 13 is configured to classify and display the files according to file types in the global index list while searching a target file.

The browsing module 13 is further configured to trigger the indexing module 12 to update the global index list during manual update of the global index list.

The mobile terminal further comprises: a file reading and writing module 14 and a searching module 15; wherein,
the file reading and writing module 14 is configured to, after file creation or deletion, create and delete an index item in the global index list through invoking a CreatFilelndexltem interface and a DelFileIndexItem interface provided by the indexing module;
the searching module 15 is configured to search the target file in the global index list according to an input keyword of the target file.

The browsing module 13 is further configured to display the target file searched out.

That the scanning module 11 acquires the related information of the each file in the mobile terminal refers to that: the scanning module 11 scans each file through a read-write interface provided by an existing file system in the mobile terminal, acquires file names and file paths of all the files in a storage medium of the mobile terminal, obtains extension names of the files based on the file names, and sends the file names, file paths and extension names of the files to the indexing module 12 of the mobile terminal.

That the indexing module 12 creates a global index list according to the acquired related information of the each file refers to that: the indexing module 12 creates one index item for each file according to received related information of the each file. The index items of all the files constitute the global index list. Each index item in the global index list includes the file name, file path, an extension name, file type and file sub-type of each file.

That the browsing module 13 classifies and displays the files according to file types in the global index list refers to that: the browsing module 13 reads the global index list via the GetFileIndexItem interface provided by the indexing module 12, organizes the files according to the file types and file sub-types of the files in the global index list, and classifies and displays the files.

Based on the mobile terminal shown in Fig. 1, the present disclosure also provides a file browsing method for the mobile terminal. Fig. 2 is a flow schematic diagram of realization of the file browsing method provided by the present disclosure. As shown in Fig. 2, the method includes the following steps:
Step 201, scanning files in the mobile terminal and acquiring related information of each file in the mobile terminal;
specifically, the files in the mobile terminal are organized by an existing file system and stored in a storage medium in the mobile terminal. The file system contains a plurality of file nodes. Each file node corresponds to one file. A file node stores the file name, file path, file attribute and other related information of a file. All the file nodes are organized into a tree structure. The scanning module of the mobile terminal scans every file node through a read-write interface provided by the file system, and acquires the file names, file paths and other related information of all the files in the storage medium of the mobile terminal. A file name is a string. The part behind "." of a string is the extension name of the string. The scanning module obtains the extension name of a file from a file name.

Whenever the scanning module acquires related information of a file, it sends the related information to the indexing module via the CreatFileIndexItem interface provided by the indexing module of the mobile terminal. The related information includes the file name, file path and extension name of the file.

Step 202, creating a global index list according to the acquired related information of the each file.

Specifically, the indexing module of the mobile terminal creates an index item for every file according to the received related information of the each file. The index items of all the files constitute the global index list. Each index item in the global index list includes the file name, file path, extension name, file type, file sub-type and other fields of the file. The file type and file sub-type are set by the indexing module according to the extension name or file path of the file during the creation of an index item. Each index item corresponds to one file type and one file sub-type. The rule for correspondence between files and file types and that between files and file sub-types can be set through the SetFileTypeRule interface and SetFileSub-typeRule interface of the indexing module, separately. The correspondence rule may be that a specific extension name corresponds to a specific file type, or a specific file path corresponds to a specific file type. The file type may be audio, video, image, or text, etc.. The file sub-types are the further division of a file type, the specific division rule of which can be set through the SetFileSub-typeRule interface of the indexing module; for example, the file sub-type of audio can be mp3, wma or ogg, etc., and alternatively, file sub-types of audio can be classified by music styles, and etc.

Wherein, when the indexing module sets a file type and a file sub-type in an index item, firstly it searches a file type corresponding to a file from among the existing file types according to the rule for correspondence between files and file types; when the file type is found, it sets the file type of the file to which the index item corresponds as the found file type. Then it searches a file sub-type corresponding to the file from among the existing file sub-types according to the rule for correspondence between files and file sub-types; when the file sub-type is found, it sets the file sub-type of the file to which the index item corresponds as the found file sub-type. If the corresponding file type is not found, it creates a new file type and set the file type of the file to which the index item corresponds as "Others" type; for example, the file type to which a file with an extension name of mp3 corresponds is audio, and the file type to which a file with an extension name of jpeg corresponds is image.

The indexing module can also automatically update the global index list, periodically. The period can be determined based on a file increase/decrease frequency, which can be set as one day, one week or other time. When the indexing module automatically updates the global index list, it can trigger the scanning module to scan all the files in the storage of the mobile terminal. The update strategy may be that the indexing module deletes the existing global index list before update, and then re-creates a global index list according to the related information of the files sent by the scanning module, or the scanning module reads related information of a file from file nodes, and searches the file to which the related information corresponds in the global index list according to the related information of the file; If the file can be found, it means the file exists already; otherwise, the scanning module needs to send the related information of the file to the indexing module, then the indexing module creates a new index item in the global index list.

Furthermore, when a new storage card is inserted into the mobile terminal, the indexing module can also automatically update the global index list. After file creation or deletion, the file reading and writing module of the mobile terminal can create and delete the index items in the global index list through invoking the CreatFileIndexItem interface and DelFileIndexItem interface provided by the indexing module. The modules in the mobile terminal may invoke the interfaces of the indexing module by function invocation or through a command. When the global index list is manually updated, the browsing module triggers the indexing module to update the global index list.

Step 203, classifying and displaying the files according to the file types in the global index list while searching a target file.

Specifically, during search of a target file, the browsing module of the mobile terminal is triggered by a key of the mobile terminal. The triggered browsing module reads the global index list through the GetFileIndexItem interface of the indexing module. According to the file types and file sub-types of the files in the global index list, the browsing module classifies and displays the files. For example, audio files, video files, text files and image files are displayed by the browsing module.

The type of the target file is selected from the file types displayed by the browsing module. The browsing module displays one or a plurality of file sub-types under this file type and then selects one file sub-type from the plurality of file sub-types. The browsing module displays all the files under this file sub-type and selects the target file from them. For example, an image is needed to be inserted during edition of a multimedia message, the browsing module is triggered, and displays all image files stored in the mobile terminal; if there are many files under a file type or a file sub-type, the searching module of the mobile terminal may be triggered in order to find the target file faster. The keyword of the target file is input to the searching module, and the searching module searches the target file from among the files under this file type or file sub-type in the global index list; and then the target file is displayed through the browsing module.

The foregoing descriptions are preferred embodiments of the present disclosure and are not intended to limit the present disclosure. All modifications, equivalent substitutes and improvements made without departing from the spirit and principle of the present disclosure shall be within the protection scope of the present disclosure.

## Claims

1. A mobile terminal, comprising a scanning module, an indexing module and a browsing module; wherein,
the scanning module is configured to scan files in the mobile terminal and acquire related information of each file in the mobile terminal;
the indexing module is configured to create a global index list according to the related information of the each file; and
the browsing module is configured to classify and display the files according to file types in the global index list while searching a target file.

2. The mobile terminal according to claim 1, wherein,
the browsing module is further configured to trigger the indexing module to update the global index list during manual update of the global index list.

3. The mobile terminal according to claim 1, further comprising: a file reading and writing module, and a searching module; wherein,
the file reading and writing module is configured to, after file creation or deletion, create and delete an index item in the global index list through invoking an interface provided by the indexing module;
the searching module is configured to search the target file in the global index list according to an input keyword of the target file; and
the browsing module is further configured to display the target file searched out.

4. A file browsing method, comprising:
scanning files in a mobile terminal and acquiring related information of each file in the mobile terminal; creating a global index list according to the acquired related information of the each file;
classifying and displaying the files according to file types in the global index list while searching a target file.

5. The method according to claim 4, wherein the acquiring related information of each file in the mobile terminal comprises:
scanning every file node through a read-write interface provided by a file system, acquiring file names and file paths of all the files in a storage medium of the mobile terminal, obtaining extension names of the files based on the file names, and sending the file names, file paths and extension names of the files to an indexing module of the mobile terminal by a scanning module of the mobile terminal.

6. The method according to claim 4, wherein the creating a global index list according to the acquired related information of the each file comprises:
creating one index item for the each file by an indexing module of the mobile terminal according to the related information of the each file which is received by the index module;
wherein index items of all the files constitute the global index list; each index item in the global index list includes a file name, a file path, an extension name, a file type and a file subtype of each file.

7. The method according to claim 6, further comprising:
periodically updating the global index list by the indexing module; or after a new storage card is inserted into the mobile terminal, automatically updating the global index list by the indexing module; or after file creation or deletion, creating and deleting the index items in the global index list by a file reading and writing module of the mobile terminal through invoking an interface provided by the indexing module; or during manual update of the global index list, triggering the indexing module to update the global index list by a browsing module of the mobile terminal.

8. The method according to claim 6, wherein the classifying and displaying the files according to file types in the global index list comprises:
reading the global index list via an interface of the indexing module of the mobile terminal, classifying and displaying the files according to the file types and file sub-types of the files in the global index list by a browsing module of the mobile terminal.

9. The method according to claim 8, further comprising:
selecting a file type of the target file from the file types displayed by the browsing module; displaying one or a plurality of file subtypes of this file type, selecting one file subtype from the plurality of file subtypes, displaying all files under this file subtype and selecting the target file from the all files under this file subtype by the browsing module.

10. The method according to claim 9, further comprising:
inputting a keyword of the target file;
searching the target file in the global index list by a searching module of the mobile terminal according to the keyword, and displaying the found target file by the searching module.
